# EUROPÄISCHE PATENTSCHRIFT

(11) **EP 2 106 230 B1**
(45) Veröffentlichungstag und Bekanntmachung des Hinweises auf die Patenterteilung: **25.04.2012**
(21) Anmeldenummer: 07847247.9
(22) Anmeldetag: 21.11.2007
(51) Int. Cl.: A47J 31/60

(54) **HALTERUNG FÜR SERVICEFUNKTIONSOBJEKT**
HOLDER FOR A SERVICE FUNCTION OBJECT
SUPPORT POUR OBJET FONCTIONNEL D'ENTRETIEN

(30) Priorität: 21.12.2006 DE 102006060745
(43) Veröffentlichungstag der Anmeldung: 07.10.2009
(73) Patentinhaber: BSH Bosch und Siemens Hausgeräte GmbH, 81739 München (DE)
(72) Erfinder: BEUTLROCK, Maximilian, 83361 Kienberg (DE); FRITZ, Jürgen, 83358 Seebruck (DE); BREZOVNIK, Peter, 3330 Mozirje (SI); PAVLOVIC, Henrik, 3333 Ljubno Ob Savinji, Slowenien (SI); SEDOVSEK, Aleksander, 3330 Mozirje (SI); ZIBRET, Igor, 3327 Smartno Ob Paki (SI)
(86) Internationale Anmeldenummer: PCT/EP2007/062616
(87) Internationale Veröffentlichungsnummer: WO 2008/077694

(56) Entgegenhaltungen:
- EP-A- 1 210 894
- DE-U1- 20 312 094
- US-A- 5 297 596

## Beschreibung

Die Erfindung betrifft eine Heißgetränkemaschine mit einem Reinigungsprogramm und gegebenenfalls einem Entkalkungsprogramm (Serviceprogramm), das den Einsatz zumindest eines Servicefunktionsobjekts erfordert. Eine Heißgetränkemaschine ist zum Beispiel ein Kaffeevollautomat, eine Padmaschine oder ein Multibeveragegerät für die Zubereitung verschiedenartiger Heißgetränke. Unter einem Servicefunktionsobjekt ist in dieser Anmeldung ein Objekt zu verstehen, das für die Servicefunktion, das Reinigen oder Entkalken, erforderlich ist und bei Ablauf eines Serviceprogramms in eine Funktionseinheit der Maschine einzulegen ist; d.h. es ist eine Disc, die in die Brühkammer eingelegt wird und die Ablaufinformationen für den Servicevorgang trägt.

Eine Heißgetränkemaschine ist zum Beispiel in der EP 1 483 994 B1 dargelegt. Es handelt sich um eine Filterkaffeemaschine, die Wasser aus einem Wasservorratsbehälter erhitzt und durch eine Steigleitung in einen Kaffeefilter fördert. Aus diesem fließt der fertige Kaffee wiederum in ein Getränkegefäß. Die Kaffeemaschine muss bei Bedarf gereinigt und entkalkt werden. Dies kann mit Hilfe von haushaltsüblichen Reinigern und Entkalkungsmitteln wie zum Beispiel Essig oder mit speziell für Kaffeemaschinen hergestellten Reinigungs- und / oder Entkalkungsmitteln geschehen. Bei höherwertigen Heißgetränkemaschinen, insbesondere bei Kaffeevollautomaten, sind nur spezielle Servicefunktionsobjekte verwendbar. Der Reinigungs- und/oder Entkalkungsvorgang wiederholt sich in größeren Abständen, die von der Wasserhärte und der Häufigkeit der Gerätebenutzung abhängig sind. In der Regel stehen die erforderlichen Servicefunktionsobjekte jedoch dann nicht zur Verfügung, wenn sie gebraucht werden.

Die EP 1 210 894 A1 offenbart eine Getränkemaschine mit einer Eintrageinrichtung für festes Reinigungsmittel, insbesondere in Presskörperform, gekennzeichnet durch eine selbsttätig dosierende, in sich geschlossene Dosiereinnchtung für das Reinigungsmittel, die einen Auslauf, einen gegen den Auslauf abgeschirmten Vorratsbehälter und eine Dosiereinheit umfasst.

Es ist daher Aufgabe der Erfindung, einen Aufbewahrungsplatz für Servicefunktionsobjekte anzugeben, so dass sie jederzeit griffbereit sind.

Bei der eingangs genannten Heißgetränkemaschine wird diese Aufgabe erfindungsgemäß dadurch gelöst, dass an oder in der Maschine eine Halterung für die Servicefunktionsobjekte, angeordnet ist. Eine Halterung kann zum Beispiel eine Schublade, ein Einsteckfach oder ein Köcher sein. Die Erfindung verfolgt jedenfalls das Prinzip, eine Einrichtung an der Maschine anzuordnen, die die Servicefunktionsobjekte unmittelbar am Gerät platziert, so dass sie jederzeit griffbereit sind. Die sonst oft erforderliche Suche nach den Objekten wird somit vermieden.

Nach einer vorteilhaften Ausgestaltung der Erfindung ist die Halterung ein Einsteckfach. Gegenüber einer Schublade hat es den Vorteil, dass es die Bedienung vereinfacht. Im Gegensatz zu einer Schublade muss es nämlich nicht erst geöffnet werden, um ein Servicefunktionsobjekt zu entnehmen. Es entfällt dadurch ein Bedienungsschritt. Ein weiterer Vorteil des Einsteckfachs gegenüber einer Schublade besteht darin, dass es nicht zwingend zusätzlichen Platz erfordert. Es kann leichter an einer Stelle im Gehäuse untergebracht werden, an der ohnehin noch freier Platz vorhanden ist.

Nach einer weiteren vorteilhaften Ausgestaltung der Erfindung ist das Einsteckfach abgeschlossen. Das heißt es wird abgedeckt und ist somit vor Verschmutzung, vor allem vor Verstauben geschützt. Außerdem stört ein abgedecktes Einsteckfach nicht die Optik der Maschine. Die Servicefunktionsobjekte brauchen nämlich nicht sichtbar aufbewahrt zu werden, da sie nicht bei jeder Benutzung erforderlich sind und nicht der unmittelbaren Funktion der Heißgetränkemaschine dienen.

Um eine zusätzliche Klappe zu vermeiden, ist das Einsteckfach durch einen schwenkbaren oder abnehmbaren Bestandteil der Getränkemaschine reversibel abgedeckt, vorteilhafterweise durch einen abnehmbaren Wasservorratsbehälter. Das heißt, das Einsteckfach liegt beispielsweise hinter dem Wasserbehälter und wird dadurch von ihm verdeckt, sobald er bestimmungsgemäß auf die Maschine aufgesetzt ist. Der Wasservorratsbehälter muss für die Reinigung oder Entkalkung des Geräts ohnehin abgenommen werden, so dass anschließend das oder die erforderlichen Servicefunktionsobjekte leicht entnommen werden können. Es ist also kein zusätzlicher Bedienungsschritt für deren Entnahme erforderlich.

Erfindungsgemäß ist die Halterung, beispielsweise das Einsteckfach an die Form der Servicefunktionsobjekte angepasst. Dadurch kann der vorgesehene Aufbewahrungsplatz ausschließlich für die entsprechenden Servicefunktionsobjekte genutzt und nicht anderweitig verwendet werden. Andere Gegenstände, wie zum Beispiel Messlöffel oder Kaffeefilter, passen nicht in dieses Fach. Außerdem benötigt ein solches Fach nicht mehr Platz als notwendig und gibt sehr schnell einen Überblick über das Vorhandensein der Servicefunktionsobjekte. Beim Abnehmen des Wassertanks etwa ist sofort zu erkennen, ob ein Servicefunktionsobjekt vorrätig ist.

Spezielle Heißgetränkemaschinen erfordern das Einsetzen von Portionen an Getränkesubstrat in Form von so genannten Getränke-Discs. Die Discs tragen außerdem Informationen zur Steuerung der Maschine bei der Zubereitung des Getränks. Auch für ein Reinigungsprogramm ist der Einsatz einer speziellen Service-Disc als Servicefunktionsobjekt erforderlich, da sie Steuerungsinformationen für die Reinigung an die Maschine überträgt. Erfindungsgemäß wird bei einer solchen Heißgetränkemaschine die Halterung an die Disc-Form angepasst. Das kann je nach Erfordernis für eine, zwei und auch mehrere Discs erfolgen. Die Form der Halterung gibt somit ihren Zweck sofort zu erkennen. Eine andere als die zweckmäßige Verwendung ist also weitgehend ausgeschlossen.

Nach einer weiteren vorteilhaften Ausgestaltung der Erfindung ist der Halterung an die Aufnahme von zwei Service-Discs, je eine für Entkalkung und eine für Reinigung, angepasst. Die Discs bestehen aus einem scheibenförmigen Führungsabschnitt und einem konzentrisch darauf aufgesetzten Kapselbereich. Der Kapselabschnitt der Service-Discs ist kleiner als der der Getränke-Discs. Verwechslungen bei der Bestückung des Einsteckfachs sind somit ausgeschlossen, da die größeren Getränke-Discs nicht ins Einsteckfach passen, das für die kleineren Service-Discs konzipiert ist.

Das Prinzip der Erfindung wird im Folgenden anhand einer Zeichnung beispielshalber noch näher erläutert. In der Zeichnung zeigen:
- Figur 1: eine Heißgetränkemaschine mit Disc-System von hinten in einer perspektivischen Darstellung,
- Figur 2: die Heißgetränkemaschine bei abgenommenen Wasservorratsbehälter von hinten, und
- Figur 3: ein Einsteckfach für Service-Discs.

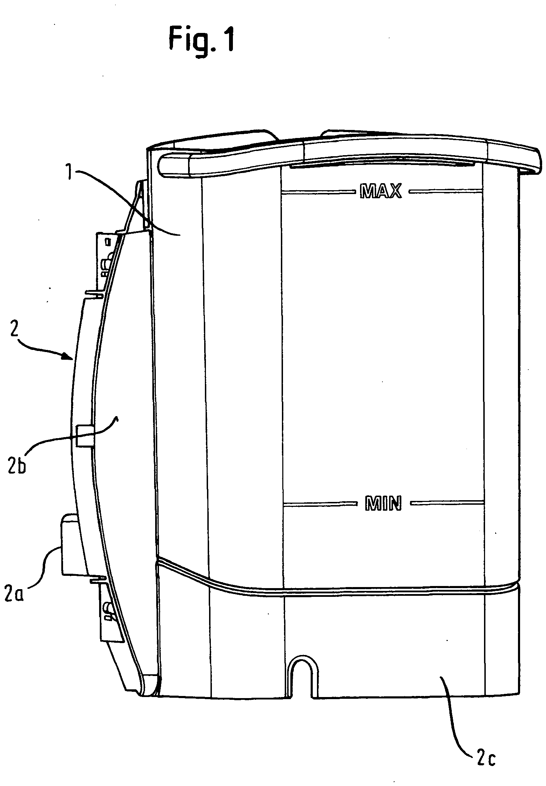

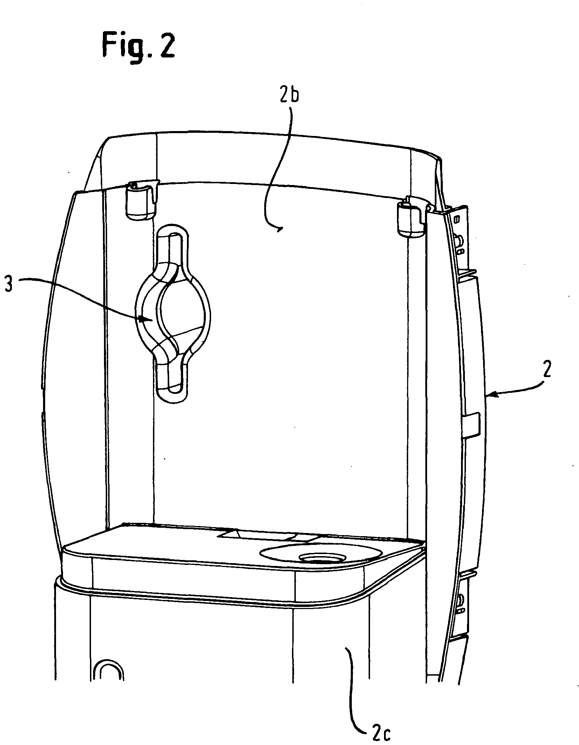

Figur 1 zeigt eine Heißgetränkemaschine mit einem Disc-System von hinten in einer perspektivischen Darstellung. Die Maschine umfasst einen abnehmbaren Wasservorratsbehälter 1 und ein Gehäuse 2. Es weist ein Gehäusevorderteil 2a, eine Gehäuserückwand 2b und einen Gehäusesockel 2c auf. Das Gehäusevorderteil 2a ist in der Darstellung nur schematisch zu erkennen. Die genaue Ausführung ist für die Erfindung unerheblich. Der Wasserbehälter 1 ist auf den Gehäusesockel 2c aufgesetzt und dort vor der Gehäuserückwand 2b des Gehäusevorderteils 2a gehaltert. In der Gehäuserückwand 2b befindet sich ein Einsteckfach 3 (vergleiche Figur 2) als Halterung für Servicefunktionsobjekt. In Figur 1 ist es nicht zu sehen, weil es durch den Wasserbehälter 1 abgedeckt ist.

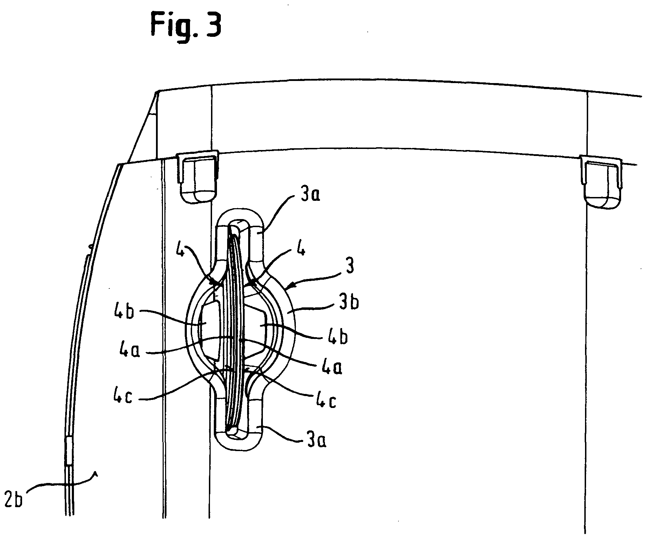

Figur 2 zeigt die Heißgetränkemaschine bei abgenommenem Wasserbehälter 1 von hinten. In der Gehäuserückwand 2b befindet sich links oben das erfindungsgemäße Einsteckfach 3 für zwei Service-Discs 4 (vergleiche Figur 3) als Servicefunktionsobjekte. Es ist in die Gehäuserückwand 2b an einer Stelle integriert, an der hinter der Gehäuserückwand 2b innerhalb des Gehäuses 2 noch freier Platz vorhanden ist. Erst durch Abnehmen des Wasserbehälters 1 ist das Einsteckfach 3 zugänglich. Dies ist hinnehmbar, weil bei Einsatz der Service-Discs 4 zur Reinigung oder Entkalkung der Getränkemaschine der Wasserbehälter 1 im Allgemeinen ohnehin abgenommen werden muss. Die Lage des Einsteckfachs 3 in der Gehäuserückwand 2b erschwert also die Bedienung der Getränkemaschine nicht. Zudem beeinträchtigt sie auch nicht deren Optik.

Figur 3 ist eine Detaildarstellung des Einsteckfachs 3 mit zwei eingesetzten Service-Discs 4. Sie haben prinzipiell den gleichen Aufbau wie die Getränke-Discs. Sie sind rund und weisen einen dünnen, scheibenförmigen Deckelbereich 4a und einen gedrungenen Kapselbereich 4b auf. Der Kapselbereich 4b der Service-Disc 4 liegt auf einer Unterseite 4c der Service-Disc 4 und ist kleiner als der entsprechende Kapselbereich einer Getränke-Disc. Die Durchmesser des Deckelbereichs 4a einer Service-Disc 4 und einer Getränke-Disc dagegen sind identisch, weil sie in dieselbe Brühkammer einer Getränkemaschine passen müssen.

Die Form des Einsteckfachs 3 ist genau an die Form von zwei Service-Discs 4 angepasst, die mit ihren Oberseiten aneinander anliegen. Sie gliedert sich in zwei Randbereiche 3a und einen dazwischen liegenden Mittelbereich 3b. Die Randbereiche 3a sind schmal ausgeführt; in ihnen ist nur Platz für die zwei dünnen Deckelbereiche 4a der zwei Service-Discs 4. Die Abmessungen des Mittelbereichs 3b sind genau an die Abmessungen der Kapselbereiche 4b von zwei Service-Discs 4 angepasst. Getränke-Discs passen wegen ihres größeren Kapselbereichs somit nicht ins Einsteckfach 3.

Durch die Verbreiterung im Mittelbereich 3b des Einsteckfachs 3 ergibt sich ein Freiraum zum Entnehmen der Service-Discs 4. Die volle Breite des Einsteckfachs 3 im Mittelbereich 3b wird in der Ebene der Gehäusewand 2b nur durch die schmalen Deckelbereiche der Service-Discs 4a belegt und bietet deshalb rechts und links noch genug Platz zum bequemen Greifen der Service-Discs 4.

Da es sich bei dem vorhergehenden, detailliert beschriebenen Einsteckfach als Halterung um ein Ausführungsbeispiel handelt, kann es in üblicher Weise vom Fachmann in einem weiten Umfang modifiziert werden, ohne den Bereich der Erfindung zu verlassen. Insbesondere kann auch die konkrete Anordnung der Halterung in der Getränkemaschine an anderer Stelle als in der hier beschriebenen erfolgen. Ebenso kann die Halterung in einer anderen Form ausgestaltet werden, wenn dies aus Platz- beziehungsweise designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Wasservorratsbehälter
- 2: Gehäuse
- 2a: Gehäusevorderteil
- 2b: Gehäuserückwand
- 2c: Gehäusesockel
- 3: Einsteckfach, Halterung
- 3a: Randbereich des Einsteckfachs
- 3b: Mittelbereich des Einsteckfachs
- 4: Service-Disc, Servicefunktionsobjekt
- 4a: Deckelbereich der Service-Disc
- 4b: Kapselbereich der Service-Disc
- 4c: Unterseite der Service-Disc 4

## Patentansprüche

1. Heißgetränkemaschine mit zumindest einem Reinigungsprogramm und gegebenenfalls einem Entkalkungsprogramm, das den Einsatz eines Servicefunktionsobjekts (4) erfordert, wobei das Servicefunktionsobjekt eine Disc ist, die in eine Brühkammer eingelegt wird, und die Ablaufinformationen für einen Servicevorgang trägt, **gekennzeichnet durch** eine an die Disc-Form angepasste Halterung (3) für das Servicefunktionsobjekt (4) an der Maschine.

2. Getränkemaschine nach Anspruch 1, **gekennzeichnet durch** ein Einsteckfach (3) als Halterung.

3. Getränkemaschine nach Anspruch 1 oder 2, **dadurch gekennzeichnet, dass** die Halterung (3) abgeschlossen ist.

4. Getränkemaschine nach obigem Anspruch mit einem Wasservorratsbehälter (1), **dadurch gekennzeichnet, dass** die Halterung (3) durch den Wasservorratsbehälter (1) abgedeckt ist.

5. Multibeverage-Gerät nach obigem Anspruch, **dadurch gekennzeichnet, dass** die Halterung (3) an zwei Service-Discs (4) angepasst ist.

## Claims

1. Hot beverage machine with at least one cleaning program and optionally a decalcification program requiring the use of a service-function object (4), wherein the service-function object is a disc which is placed in a brewing chamber and which bears program data for a service procedure, **characterised by** a holder (3), which is adapted to the disc shape, for the service-function object (4) at the machine.

2. Hot beverage machine according to claim 1, **characterised by** an insert compartment (3) as holder.

3. Hot beverage machine according to claim 1 or 2, **characterised in that** the holder (3) is closed off.

4. Beverage machine according to the preceding claim with a water reservoir container (1), **characterised in that** the holder (3) is covered by the water reservoir container (1).

5. Multi-beverage appliance according to the preceding claim, **characterised in that** the holder (3) is adapted to two service discs (4).

## Revendications

1. Machine de préparation de boissons chaudes comprenant au moins un programme de nettoyage et le cas échéant un programme de détartrage qui nécessite l'utilisation d'un objet fonctionnel d'entretien (4), l'objet fonctionnel d'entretien étant un disque qui est inséré dans la chambre d'infusion et porte des informations de déroulement pour une opération d'entretien, **caractérisée par** un support (3), adapté à la forme du disque, pour l'objet fonctionnel d'entretien (4) sur la machine.

2. Machines de préparation de boissons selon la revendication 1, **caractérisée par** un compartiment d'insertion (3) en tant que support.

3. Machines de préparation de boissons selon la revendication 1 ou 2, **caractérisée en ce que** le support (3) est fermé.

4. Machines de préparation de boissons selon la revendication ci-dessus, **caractérisée en ce que** le support (3) est recouvert par le réservoir dé stockage d'eau (1).

5. Appareil multi-boissons selon la revendication ci-dessus, **caractérisée en ce que** le support (3) est adapté à deux disques d'entretien (4).
